# EUROPÄISCHE PATENTSCHRIFT

(11) **EP 1 253 340 B1**
(45) Veröffentlichungstag und Bekanntmachung des Hinweises auf die Patenterteilung: **14.06.2006**
(21) Anmeldenummer: 02005557.0
(22) Anmeldetag: 12.03.2002
(51) Int. Cl.: F16D 23/04

(54) **Nabe einer Schaltkupplung**
Clutch hub
Moyeu d'embrayage

(30) Priorität: 25.04.2001 DE 10120228
(43) Veröffentlichungstag der Anmeldung: 30.10.2002
(73) Patentinhaber: Schaeffler KG, 91074 Herzogenaurach (DE)
(72) Erfinder: Buer, Gerald, 96172 Mühlhausen (DE); Martin, Reiner, 96178 Pommersfelden (DE); Röckelein, Ernst, 96138 Burgebrach (DE)

(56) Entgegenhaltungen:
- EP-B- 0 821 175
- DE-A- 10 010 076
- DE-A- 19 917 230
- DE-A- 19 942 056
- FR-E- 64 076

## Beschreibung

### Gebiet der Erfindung

Die Erfindung betrifft eine Nabe einer Schaltkupplung, die Nabe gebildet aus wenigstens einem im Wesentlichen schalenförmig ausgebildeten Blechformteil mit einer geformten inneren Verzahnung für den Eingriff in eine Getriebewelle und einer äußeren Verzahnung für den Eingriff einer Gegenverzahnung an einer Schaltmuffe auf der Nabe.

### Hintergrund der Erfindung

Aus Blechformteilen gebildete Naben zeichnen sich insbesondere durch die sparsame Verwendung von Material bei ihrer Herstellung und durch geringes Gewicht aus. Eine gattungsgemäße Nabe ist in DE 19942056 offenbart. In US 4,131,032 A ist eine derartige Nabe beschrieben, die insbesondere in unsynchronisierten oder synchronisierten Schaltkupplungen von Fahrzeuggetrieben eingesetzt ist. Ein rotationssymmetrisch und schalenförmig ausgebildetes Blechformteil ist innen und außen jeweils mit einer in Längsrichtung der Nabe ausgerichteten Verzahnung versehen. Die innere Verzahnung ist an einem vom Boden des Napfes abgehenden, in Längsrichtung der Nabe weisenden und konzentrisch zur äußeren Verzahnung angeordneten Bund ausgebildet. Auf dem Bund sitzt eine Scheibe mit Z-förmigem Querschnitt, die außen von der äußeren Verzahnung umgriffen ist. Die Scheibe ist an dem Blechformteil verschweißt und erhöht die Festigkeit bzw. Steifigkeit der Nabe.

Die Breite der Nabe und die Breite der Verzahnung sind abhängig von den Belastungen an der Nabe während der Übertragung von Drehmomenten, wenn die auf der Welle sitzende Nabe und ein Gangrad mit der Schaltmuffe verbunden sind. Die Breite der Nabe ist jedoch auch durch die Schaltwege der Schaltmuffe auf der Nabe bestimmt. Bei den häufiger auftretenden Schaltkupplungen zwischen zwei wahlweise zu schaltenden Gangrädern sitzt die Schaltmuffe aus einer ungeschalteten Mittelstellung in Längsrichtung nach links und rechts schaltbar auf der Nabe. In der Mittelstellung sitzt die Schaltmuffe damit durch die Breite der Verzahnung gut geführt und gestützt verkippsicher auf der Nabe. Nach links oder rechts für eine wahlweise Verbindung mit einem der Gangräder verschoben, trägt nur noch ein links oder rechts liegender Anteil der Verzahnung an der Nabe die Schaltmuffe. Nur dieser Anteil überträgt dann auch die Drehmomente.

Weniger häufig sind Schaltkupplungen, mit denen nur zu einer Seite geschaltet wird. Diese Schaltkupplungen dienen z. B. für das Schalten eines sogenannten Overdrive oder für das Verbinden der Schaltwelle mit einem Rückwärtsgang. In diesen Anwendungen sitzt die Schaltmuffe in einer von den Gangrädern gelösten Ausgangsstellung gut geführt und gestützt auch auf einer in der Regel die gesamte Breite der Nabe einnehmenden Verzahnung. Die Nabe muss dann entsprechend breit ausgeführt sein um ein sicheres Führen und Abstützen der Schaltmuffe in der Ausgangsstellung zu gewährleisten. Hierzu müssen überflüssig viel Bauraum im Getriebe und das entsprechende Material für die Fertigung der Nabe geopfert werden. Außerdem lassen sich an den spanlos gefertigten Naben des Standes der Technik in Längsrichtung über die Stirnseite der Nabe hinaus ausladende Konturen schwer verwirklichen.

### Zusammenfassung der Erfindung

Die Aufgabe der Erfindung ist es daher, eine Nabe zu schaffen, mit der die vorgenannten Nachteile vermieden werden.

Die Aufgabe ist nach dem kennzeichnenden Teil des Anspruches dadurch gelöst, dass die Nabe zumindest an einer Stirnseite der Nabe mit axial hervorstehenden und an der Nabe sowie die Stützbreite der Nabe zur Schaltmuffe verbreiternden Stützelementen versehen ist. Eine Nabe gemäß Erfindung muss jetzt nur noch so breit gefertigt werden, wie es der tragende Anteil der Verzahnung im eingerückten Zustand der Schaltmuffe erfordert. In der von dem Gangrad gelösten Ausgangsstellung sitzt die Schaltmuffe zu der einen Längsseite anteilig auf der Verzahnung, ragt über die Nabe hinaus und stützt sich ansonsten an den Stützelementen ab. Dazu schließen sich die Stützelemente vorzugsweise in axialer Richtung radial außenliegend an die äußere Verzahnung an. Für ein sicheres Abstützen der Schaltmuffe an der Nabe sind bevorzugt drei der Stützelemente in möglichst gleichmäßigen Abstand am Umfang der Nabe angeordnet.

Die Stützelemente sind vorzugsweise jeweils durch ein Formteil aus Stahl gebildet. Derartige Formteile lassen sich, insbesondere in der Massenfertigung, schnell und kostengünstig in den verschiedensten Formen ihrer Gestalt herstellen.

So ist dann auch in einer bevorzugten Ausgestaltung der Erfindung vorgesehen, dass das Stützelement ein U-förmiger Bügel aus Draht ist. Weiter ausgestaltet sieht die Erfindung vor, dass die Schenkel des Bügels parallel zu der Längsmittelachse der Nabe ausgerichtet sowie die freien Enden der Schenkel eines Bügels mit dem gleichen Abstand von der Längsmittelachse der Nabe an der Nabe verschweißt sind. Die Bügel ragen über die Stirnseite der Nabe hinaus und verbreitern die Stützbreite der Nabe für den Sitz der Schaltmuffe in ihrer Ausgangsstellung. Dabei sitzt die Schaltmuffe zumindest im nichtgeschalteten Zustand vorzugsweise auf den Bügeln auf.

In einer weiteren Ausgestaltung der Erfindung ist vorgesehen, dass zwischen den Schenkeln eines Bügels in den Bügel eine zum Bügel hin offene Längsnut der Nabe ausläuft. Die Längsnut verläuft radial nach außen offen und die Verzahnung in Umfangsrichtung unterbrechend. Die Bügel sitzen mit jeweils einem Schenkel an einer seitlichen Flanke der durch die Längsnut gebildeten Öffnung an der Stirnseite der Nabe. Außer der Verbreiterung der Stützweite der Nabe dienen die Bügel oder andere Stützelemente als axiale Wegbegrenzung einer Längsnut in der Nabe. In einer derartigen Längsnut sind beispielsweise die Druckstücke für den Vorsynchronisationsprozess einer synchronisierten Schaltkupplung aufgenommen, wie auch eine Ausgestaltung der Erfindung vorsieht.

### Kurze Beschreibung der Zeichnungen

Die Erfindung wird nachfolgend anhand von zwei Ausführungsbeispielen näher erläutert. Es zeigen:
- Figur 1: ein Ausführungsbeispiel einer erfindungsgemäßen Nabe,
- Figur 2: die Nabe nach Figur 1 in einem nicht maßstäblich dargestellten Längsschnitt und
- Figur 3: ein weiteres Ausführungsbeispiel einer erfindungsgemäßen Nabe mit Druckstücken und einer Schaltmuffe, dargestellt in einem Halbschnitt.

### Detaillierte Beschreibung der Zeichnungen

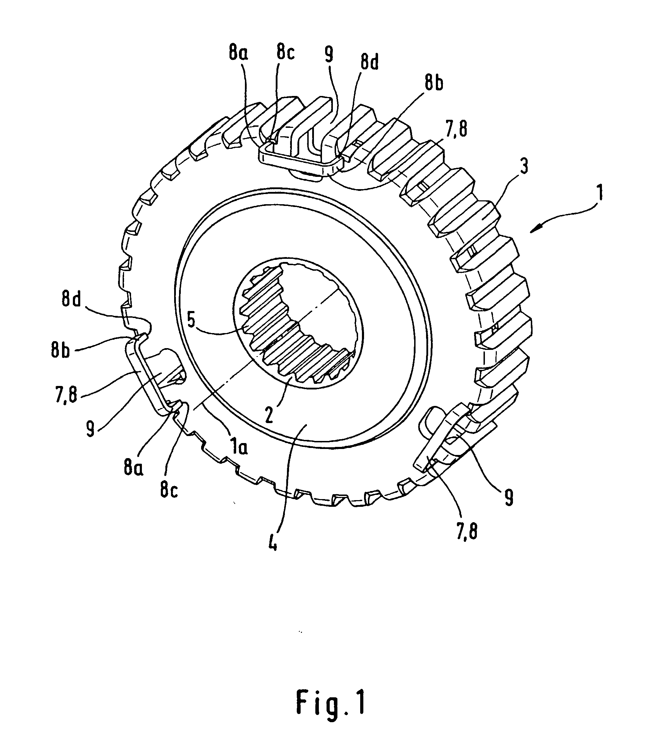

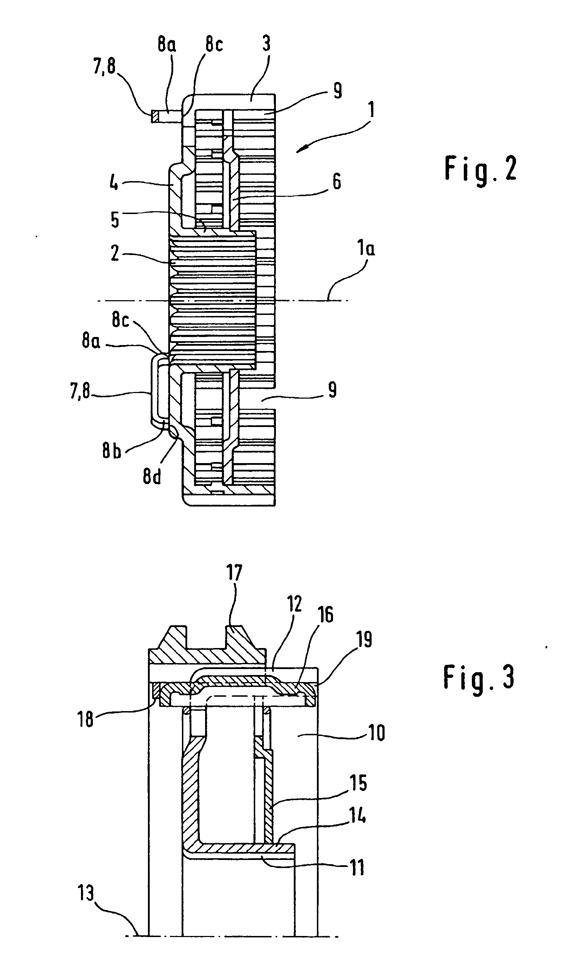

Figur 1 und Figur 2 zeigen ein Ausführungsbeispiel einer erfindungsgemäßen Nabe 1. Die Nabe 1 ist aus einem im Wesentlichen schalenförmig ausgebildeten Blechformteil gebildet und weist eine radial nach innen weisende innere Verzahnung 2 auf. Die innere Verzahnung 2 ist für den Eingriff in eine nicht dargestellte Getriebewelle vorgesehen. An dem Blechformteil ist radial nach außen gerichtet eine äußere Verzahnung 3 für den Eingriff einer Gegenverzahnung an einer nicht dargestellten Schaltmuffe vorgesehen. Der Boden des schalenförmigen Blechformteiles bildet eine Wandung 4 der Nabe. Von der Wandung 4 geht innen ein in Längsrichtung der Nabe 1 weisender und konzentrisch zur äußeren Verzahnung 3 angeordneter Bund 5 ab. Am Innendurchmesser des Bundes 5 ist die innere Verzahnung 2 ausgebildet. Auf dem Bund 5 außen sitzt eine gestanzte und gekröpft geformte Scheibe 6. Die Scheibe 6 bildet die andere Wand der Nabe 1. An der Stirnseite der Nabe 1 ist die Nabe 1 mit axial hervorstehenden und an der Wand 4 der Nabe 1 befestigten sowie die Stützbreite der Nabe 1 verbreiternden Stützelementen 7 versehen. Es sind drei der Stützelemente 7 mit gleichmäßigem Abstand zueinander am Umfang der Nabe 1 angeordnet. Die Stützelemente 7 schließen sich in axialer Richtung an die äußere Verzahnung 3 an. Jedes der Stützelemente 7 ist durch ein Formteil aus Stahl gebildet wobei das Formteil ein U-förmig ausgebildeter Bügel aus Stahldraht ist. Die Schenkel 8a und 8b des Bügels 8 sind parallel zu der Längsmittelachse 1a der Nabe ausgerichtet. Die freien Enden 8c und 8d der Schenkel 8a und 8b sind mit dem gleichen Abstand von der Längsmittelachse 1a der Nabe 1 an der Wand 4 verschweißt. Zwischen den Schenkeln 8a und 8b eines jeden Bügels 8 läuft eine zum Bügel 8 hin offene Längsnut 9 aus. Die Längsnut 9 ist radial nach außen geöffnet.

Figur 3 zeigt eine Nabe 10 mit einer inneren Verzahnung 11 und einer äußeren Verzahnung 12. Die innere Verzahnung 11 ist an einem einteilig mit der Nabe 10 ausgebildeten konzentrisch zur Längsmittelachse 13 der Nabe 10 angeordneten Bund 14 ausgebildet. Auf dem Bund 14 sitzt eine Scheibe 15. Die Scheibe 15 ist an dem Bund 14 und an der Nabe 10 verschweißt. In einer in Längsrichtung durchgehenden Längsnut 19 sitzt ein in eine Richtung axial verschiebbares Druckstück 16. Auf der äußeren Verzahnung 12 ist eine Schaltmuffe 17 längsverschiebbar angeordnet. Die Schaltmuffe 17 ist in ihrer Ausgangsstellung dargestellt. Das Druckstück 16 liegt dabei axial zu einer Seite an einem Stützelement 18 an. Das Stützelement 18 ist stirnseitig an der Nabe 10 auf Höhe der äußeren Verzahnung 12 befestigt. Das Stützelement 18 begrenzt die Nut 19 in axialer Richtung und begrenzt den Weg des Druckstücks 16 in eine axiale Richtung. Die Schaltmuffe sitzt radial auf dem Stützelement 18 auf.

### Bezugszeichen

- 1: Nabe
- 1a: Längsmittelachse
- 2: innere Verzahnung
- 3: äußere Verzahnung
- 4: Wandung
- 5: Bund
- 6: Scheibe
- 7: Stützelement
- 8: Bügel
- 8a: Schenkel
- 8b: Schenkel
- 8c: Ende
- 8d: Ende
- 9: Längsnut
- 10: Nabe
- 11: innere Verzahnung
- 12: äußere Verzahnung
- 13: Längsmittelachse
- 14: Bund
- 15: Scheibe
- 16: Druckstück
- 17: Schaltmuffe
- 18: Stützelement
- 19: Längsnut

## Patentansprüche

1. Nabe (1, 10) einer Schaltkupplung, wobei die Nabe (1, 10) aus wenigstens einem im Wesentlichen schalenförmig ausgebildeten Blechformteil mit einer geformten inneren Verzahnung (2, 11) für den Eingriff in eine Getriebewelle und mit einer äußeren Verzahnung (3, 12) für den Eingriff einer Gegenverzahnung an einer Schaltmuffe (17) auf der Nabe (10) besteht, **dadurch gekennzeichnet, dass** die Nabe (1, 10) zumindest an einer Stirnseite mit axial hervorstehenden und an ihr befestigten sowie die Stützbreite der Nabe (1, 10) in Bezug auf die Schaltmuffe (17) verbreiternden Stützelementen (7, 18) versehen ist.

2. Nabe nach Anspruch 1, **dadurch gekennzeichnet, dass** jedes der Stützelemente (7, 18) sich in axiale Richtung der äußeren Verzahnung (3, 12) anschließt.

3. Nabe nach Anspruch 1 und 2, **dadurch gekennzeichnet, dass** jedes der Stützelemente (7, 18) durch ein Formteil aus Stahl gebildet ist.

4. Nabe nach Anspruch 3, **dadurch gekennzeichnet, dass** das Stützelement (7) ein U-förmig ausgebildeter Bügel (8) aus Draht ist.

5. Nabe nach Anspruch 4, **dadurch gekennzeichnet, dass** die Schenkel (8a, 8b) des Bügels (8) parallel zu der Längsmittelachse der Nabe (1) ausgerichtete sowie die freien Enden (8c) der Schenkel (8a, 8b) wenigstens eines Bügels (8) mit dem gleichen Abstand von der Längsmittelachse der Nabe (1) an der Nabe (1) verschweißt sind.

6. Nabe nach Anspruch 3, **dadurch gekennzeichnet, dass** die Schaltmuffe (17) zumindest zeitweise auf dem Stützelement (18) aufsitzt.

7. Nabe nach Anspruch 5, **dadurch gekennzeichnet, dass** eine zum Bügel (8) hin offene Längsnut (9) in der Nabe (10) zwischen den Schenkeln (8a, 8b) wenigstens eines Bügels (8) in den Bügel (8) ausläuft.

8. Nabe nach Anspruch 3, **dadurch gekennzeichnet, dass** in eine Längsnut (19) ein in Längsrichtung der Nabe (10) verschiebbares Druckstück (16) einer synchronisierten Schaltkupplung aufgenommen ist und dass das Stützelement (18) den Weg des Druckstückes (16) zumindest in axiale Richtung begrenzt.

## Claims

1. Hub (1, 10) of a gearshift clutch, said hub (1, 10) being constituted by at least one shaped sheet metal part that is substantially cup-shaped and has a shaped inner gearing (2, 11) for engaging in a transmission shaft and an outer gearing (3, 12) for engagement of a counter-gearing of a selector sleeve (17) on the hub (10), **characterised in that** the hub (1, 10) is provided at least on one front end with axially protruding support elements (7, 18) that are fixed on the hub (1, 10) and enlarge the supporting width of the hub (1, 10) relative to the selector sleeve (17).

2. Hub according to claim 1, **characterised in that** each of the support elements (7, 18) adjoins the outer gearing (3, 12) in axial direction.

3. Hub according to claim 1 and 2, **characterised in that** each of the support elements (7, 18) is constituted by a shaped part of steel.

4. Hub according to claim 3, **characterised in that** the support element (7) is a U-shaped dip (8) of wire.

5. Hub according to claim 4, **characterised in that** the legs (8a, 8b) of the clip (8) are oriented in parallel to the central longitudinal axis of the hub (1), and the free ends (8c) of the legs (8a, 8b) of at least one clip (8) are welded to the hub (1) at the same distance from the central longitudinal axis of the hub (1).

6. Hub according to claim 3, **characterised in that** the selector sleeve (17) is seated at least intermittently on the support element (18).

7. Hub according to claim 5, **characterised in that** a longitudinal groove (9) in the hub (10) that is open towards the clip (8) ends between the legs (8a, 8b) of at least one dip (8) in the clip (8).

8. Hub according to claim 3, **characterised in that** a thrust member (16) of a synchronised gearshift clutch that is displaceable in longitudinal direction of the hub (10) is received in a longitudinal groove (19), and the support element (18) limits the travel of the thrust member (16) at least in axial direction.

## Revendications

1. Moyeu (1, 10) d'un embrayage, lequel moyeu (1, 10) est constitué d'au moins une pièce formée en tôle qui est configurée sensiblement en forme de cuvette et possède une denture intérieure formée (2, 11) pour l'engagement dans un arbre de transmission et une denture extérieure (3, 12) pour l'engagement d'une contre-denture d'un manchon de sélection (17) sur le moyeu (10), **caractérisé en ce que** le moyeu (1, 10) est muni, au moins sur un côté frontal, d'éléments de support (7, 18) qui font axialement saillie en étant fixés sur le moyeu (1, 10), et ces éléments de support (7, 18) agrandissent la largeur de support du moyeu (1, 10) par rapport au manchon de sélection (17).

2. Moyeu selon la revendication 1, **caractérisé en ce que** chacun des éléments de support (7, 18) se raccorde en direction axiale à la denture extérieure (3, 12).

3. Moyeu selon la revendication 1 et 2, **caractérisé en ce que** chacun des éléments de support (7,18) est constitué d'une pièce formée en acier.

4. Moyeu selon la revendication 3, **caractérisé en ce que** l'élément de support (7) est un étrier (8) en fil en forme de U.

5. Moyeu selon la revendication 4, **caractérisé en ce que** les bras (8a, 8b) de l'étrier (8) sont orientés parallèlement à l'axe longitudinal central du moyeu (1), et les extrémités libres (8c) des bras (8a, 8b) d'au moins un étrier (8) sont soudées au moyeu (1) à la même distance à l'axe longitudinal central du moyeu (1).

6. Moyeu selon la revendication 3, **caractérisé en ce que** le manchon de sélection (17) est assis, au moins de manière intermittente, sur l'élément de support (18).

7. Moyeu selon la revendication 5, **caractérisé en ce que**, une rainure longitudinale (9) dans le moyeu (10) qui est ouverte vers l'étrier (8) débouche entre les bras (8a, 8b) d'au moins un étrier (8) dans l'étrier (8).

8. Moyeu selon la revendication 3, **caractérisé en ce que**, un membre de la poussée (16) d'un embrayage synchronisé qui est déplaçable en direction longitudinale du moyeu (10) est reçu dans une rainure longitudinale (19), et l'élément de support (18) limite la course du membre de la poussée (16) au moins en direction axiale.
